# EUROPEAN PATENT APPLICATION

(11) **EP 3 015 536 A1**
(43) Date of publication of application: **04.05.2016**
(21) Application number: 14818210.8
(22) Date of filing: 27.06.2014
(51) Int. Cl.: C10M 101/02, C10M 107/02, C10M 169/04, C10M 129/40, C10N 30/06, C10N 40/30

(54) **COMPRESSOR OIL, METHOD FOR PRODUCING COMPRESSOR OIL, METHOD FOR COMPRESSING HYDROGEN, METHOD FOR GENERATING ELECTRIC POWER, AND METHOD FOR SUPPLYING HYDROGEN**

(30) Priority: 28.06.2013 JP 2013137127; 20.03.2014 JP 2014058639
(71) Applicant: JX Nippon Oil & Energy Corporation, Chiyoda-ku Tokyo 100-8162 (JP)
(72) Inventor: MIZUTANI Yuya, Tokyo 100-8162 (JP); KIYOSAWA Izumi, Tokyo 100-8162 (JP); SUGAWARA Tsunetoshi, Tokyo 100-8162 (JP)
(74) Representative: Grünecker Patent- und Rechtsanwälte PartG mbB
(86) International application number: PCT/JP2014/067262
(87) International publication number: WO 2014/208750

(57) **Abstract**

The present invention provides a compressor oil comprising a hydrocarbon oil having the sulfur content of 0.1% or less by mass and the aromatic content of 1% or less by mass, wherein the content of hydrocarbons having 10 or less carbon atoms is 100 ppm or less by mass based on the total amount of the compressor oil.

## Description

### Technical Field

The present invention relates to a compressor oil for use in lubrication in gas compressors compressing gas, a method for producing a compressor oil, and a method for compressing hydrogen, a method for generating electric power and a method for supplying hydrogen, using the compressor oil.

### Background Art

For highly efficient operation of compressors (gas compressors), it is effective to prevent leakage of the gas to be compressed. Therefore, in compressors, compressor oils are used for preventing the gas from leaking. The compressor oils are also required to maintain lubricity at bearing portions and the like in addition to prevention of the gas leakage. As the compressor oils, there have been known those composed of base oils, such as mineral oils, formulated with various additives (see, for example, Patent Literature 1-3).

### Citation List

### Patent Literature

Patent Literature 1: Japanese Patent Application Laid-open No. 2005-239897
Patent Literature 2: Japanese Patent Application Laid-open No. 2008-179679
Patent Literature 3: Japanese Patent Application Laid-open No. 11-335684

### Summary of Invention

### Technical Problem

In the case of compressors for use in compressing hydrogen for fuel cells, for example, since hydrogen with very high purity is compressed, it is important to prevent the hydrogen from being contaminated with specific elements. When the conventional compressor oils described above are used, however, specific components contained in the base oils or additives in the compressor oils may contaminate the gas to be compressed.

Accordingly, the object of the present invention is to provide a compressor oil capable of sufficiently preventing contamination of the gas to be compressed, a method for manufacturing a compressor oil, and a method for compressing hydrogen, a method for generating electric power and a method for supplying hydrogen, using the compressor oil.

Further, compressors, particularly for use in compressing hydrogen tend to be worn due to hydrogen embrittlement or the like, and therefore the compressor oils used in such compressors are required to have higher lubricity. The conventional compressor oils, however, are not necessarily sufficient enough in lubricity and still have had room for improvement so as to be capable of being practically used.

Accordingly, another object of the present invention is to provide a compressor oil capable of sufficiently preventing contamination of the gas to be compressed and also having high lubricity, a method for manufacturing a compressor oil, and a method for compressing hydrogen, a method for generating electric power and a method for supplying hydrogen, using the compressor oil.

### Solution to Problem

The present invention provides a compressor oil comprising a hydrocarbon oil having the sulfur content of 0.1% or less by mass and the aromatic content of 1% or less by mass, wherein the content of hydrocarbons having 10 or less carbon atoms is 100 ppm or less by mass based on the total amount of the compressor oil.

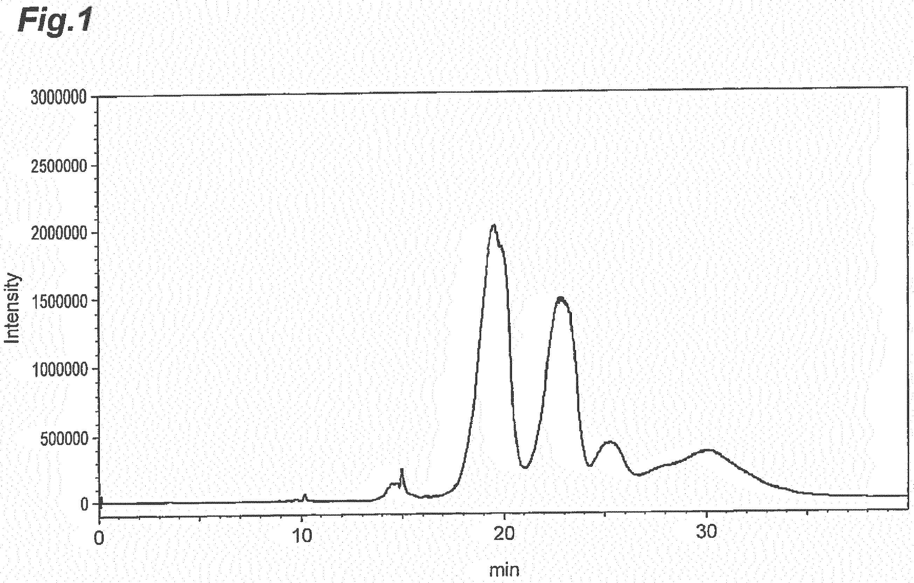

The present inventors have found that, in a compressor oil containing a hydrocarbon oil having the sulfur content of 0.1% or less by mass and the aromatic content of 1% or less by mass, contamination of the gas to be compressed can be prevented sufficiently by making the content of hydrocarbons having 10 or less carbon atoms 100 ppm or less by mass based on the total amount of the compressor oil, thereby accomplishing the present invention. In order to describe more specifically, an example of the results of gas-chromatographic analyses for the conventional compressor oils is shown in Figure 1. As seen in Figure 1, when the compressor oil is gas-chromatographically analyzed, peaks derived from the hydrocarbon oil which is the main component are detected at around the retention time of, for example, 20-30 minutes. On the other hand, the present inventors have found that the very slight peaks detected at around the retention time of 10 minutes in Figure 1 derived from hydrocarbons having 10 or less carbon atoms affect contamination of the gas to be compressed in the compressor. It is noted that the presence and the intensity of the slight peaks as detected at around the retention time of 10 minutes in Figure 1 have not been accounted for in the conventional compressor oils.

The compressor oil may further comprise an oiliness agent composed of an oxygen-containing organic compound. In this case, the content of the hydrocarbon oil may be 90 to 99.995% by mass and the content of the oiliness agent may be 0.005 to 10% by mass based on the total amount of the compressor oil.

The oxygen-containing organic compound may comprise a fatty acid having 14 to 22 carbon atoms and may comprise a branched fatty acid having 14 to 22 carbon atoms.

The compressor oil is suitably used in a compressor compressing hydrogen.

The present invention also provides a method for manufacturing a compressor oil, comprising a step of removing hydrocarbons having 10 or less carbon atoms from a composition comprising a hydrocarbon oil having the sulfur content of 0.1 % or less by mass and the aromatic content of 1% or less by mass such that the content of the hydrocarbons having 10 or less carbon atoms is 100 ppm or less by mass based on the total amount of the compressor oil to obtain the compressor oil.

The present invention also provides a method for compressing hydrogen, comprising a step of compressing the hydrogen by a compressor comprising the compressor oil.

The present invention also provides a method for generating electric power by a fuel cell, the method comprising a step of using, as a fuel for the fuel cell, hydrogen compressed by a compressor comprising the compressor oil.

The present invention also provides a method for supplying hydrogen, comprising a step of supplying hydrogen compressed by a compressor comprising the compressor oil to a fuel-cell vehicle.

### Advantageous Effects of Invention

According to the compressor oil of the present invention, contamination of the gas to be compressed can be sufficiently prevented. In addition, according to the compressor oil of the present invention, contamination of the gas to be compressed can be sufficiently prevented and also high lubricity can be attained.

### Brief Description of Drawings

[Figure 1] Figure 1 is a drawing showing an example of results of gas chromatography analyses for the conventional compressor oils.
[Figure 2] Figure 2 is a drawing showing a result of a gas chromatography analysis for poly-α-olefin used in Examples as it is (untreated).
[Figure 3] Figure 3 is a drawing showing a result of a gas-chromatography analysis for Test oil 1-1 in Examples.
[Figure 4] Figure 4 is a ¹³C-NMR chart for Isostearic A acid used in Examples.
[Figure 5] Figure 5 is a ¹³C-NMR chart for Isostearic B acid used in Examples.

### Description of Embodiments

Hereinafter, a suitable embodiment of the present invention will be described in details.

The compressor oil according to the embodiment of the present invention contains a hydrocarbon oil having the sulfur content of 0.1% or less by mass and the aromatic content of 1% or less by mass based on the total amount of the compressor oil, and the content of hydrocarbons having 10 or less carbon atoms is 100 ppm or less by mass based on the total amount of the compressor oil.

The sulfur content of the hydrocarbon oil is 0.1% (1000 ppm) or less by mass, preferably 10 ppm or less by mass, and more preferably 1 ppm or less by mass based on the total amount of the hydrocarbon oil in terms of sufficiently preventing contamination of the gas to be compressed. As used in the present invention, the sulfur content refers to the value as determined by an ultraviolet fluorescence method, as defined in JIS K2541-6:2003 "Crude petroleum and petroleum products - Determination of sulfur content".

The aromatic content of the hydrocarbon oil is 0.1% or less by mass, and preferably 0.01% or less by mass based on the total amount of the hydrocarbon oil in terms of sufficiently preventing contamination of the gas to be compressed. As used in the present invention, the aromatic content refers to the value as determined according to a fluorescent indicator adsorption method, as defined in JIS K2536-1:2003 "Liquid petroleum products - Testing method of components".

The hydrocarbon oil in the present embodiment is not particularly restricted so far as the sulfur content and the aromatic content thereof satisfy the conditions described above and includes, for example, mineral oil-based base oils, wax-cracked base oils, synthetic base oils, and mixed oils of two or more thereof. Preferred synthetic base oils include poly-α-olefins and hydrogenates thereof There also can be used waxes, such as olefin oligomers, slack wax and FT waxes and base oils obtained by isomerizing those waxes, and those obtained by hydrogenating oils containing aromatics and/or unsaturated compounds, such as terpene oils and distillated fractions of crude oil.

The hydrocarbon oil in the present embodiment preferably has the following properties.

The kinematic viscosity of the hydrocarbon oil is not particularly limited. The kinematic viscosity of the hydrocarbon oil at 40°C is preferably 10 to 800 mm²/s, 15 to 500 mm²/s, more preferably 20 to 300 mm²/s, 30 to 200 mm²/s, and further preferably 50 to 90 mm²/s. The kinematic viscosity of the hydrocarbon oil at 100°C is preferably 2 to 60 mm²/s, 3 to 50 mm²/s, more preferably 4 to 35 mm²/s, 5 to 25 mm²/s, and further preferably 8 to 15 mm²/s. When the kinematic viscosity of the hydrocarbon oil falls within the range described above, wear at the sliding portions can be reduced and stirring resistance can be lowered, thereby suppressing the energy consumption.

The viscosity index of the hydrocarbon oil is preferably 120 to 160, and more preferably 130 to 155.

As used in the present invention, the dynamic viscosities of the hydrocarbon oil at 40°C and 100°C and the viscosity index refer to the values as determined according to JIS K2283:2000 "Crude petroleum and petroleum products - Determination of kinematic viscosity and calculation of viscosity index from kinematic viscosity", respectively.

With respect to the distillation range of the hydrocarbon oil, the initial boiling point in the gas chromatography distillation test as defined in JIS K2254:1998 "Petroleum products - Determination of distillation characteristics" is preferably 250°C or higher, and more preferably 300°C or higher in order to prevent the lighter hydrocarbons from entering the gas to be compressed. In addition, the 1% distillation point is preferably 350°C or higher, and most preferably 400°C or higher. It is preferred to reduce also a trace amount of the lighter hydrocarbons which cannot be detected as the initial boiling point in the gas chromatography distillation test. Therefore, it is preferred to manufacture the hydrocarbon oil through a distillation step, for example, involving careful flashing.

The content of the hydrocarbon oil is preferably 90 to 99.995% by mass, more preferably 95 to 99.99 % by mass, and further preferably 98 to 99.9% by mass based on the total amount of the compressor oil.

The sulfur content of the compressor oil is preferably 0.1% (1000 ppm) or less by mass, more preferably 10 ppm or less by mass, and further preferably 1 ppm or less by mass.

The metallic element content of the compressor oil is preferably 100 ppm or less by mass, and more preferably 10 ppm or less by mass in terms of sufficiently preventing contamination of the gas to be compressed. The metallic element content as used in the present invention can be determined by, for example, an inductively coupled plasma (ICP) emission spectrometry analysis and a method for solvent dilution as defined in JPI-5S-38-92 or the like can be utilized for the pretreatment of samples thereof.

The compressor oil according to the present embodiment may further contain a base oil other than the hydrocarbon oil having a sulfur content of 0.1% or less by mass and an aromatic content of 1% or less by mass and/or an additive (hereinafter, referred to as "other components" in some cases), as necessary. Examples of the additives include oiliness agents, anti-oxidants, rust preventives, corrosion inhibitors, pour point depressants, extreme pressure agents, metal deactivator, detergent dispersants, or the like. The additive content is preferably 0.005 to 10% by mass, more preferably 0.01 to 5% by mass, further preferably 0.1 to 2% by mass, and particularly preferably 0.2 to 1% by mass based on the total amount of the compressor oil.

The oiliness agent includes, for example, those composed of oxygen-containing organic compounds. Such oxygen-containing organic compounds include monocarboxylic acids such as fatty acids, polycarboxylic acids, monoalcohols, polyalcohols, esters, and partial ester compounds of polyalcohols. Among them, fatty acids, polyalcohols and partial ester compounds of polyalcohols are preferred because of higher absorption ability and lower corrosiveness.

As the fatty acids, those having 14 to 22 carbon atoms are preferred and branched fatty acids having 14 to 22 carbon atoms are more preferred. The carbon number of the fatty acid is particularly preferably 16 to 20. In addition, saturated fatty acids are preferred. Examples of the fatty acids include oleic acid, isostearic acid, lauric acid, and stearic acid. Among them, isostearic acid is most preferred. Among branched fatty acids, there may be used those for which the proportion of the integrated value of the intensity of the peaks (peak areas) in the region of a chemical shift of 40 ppm or more to the sum of the integrated values of the intensity of the peaks (peak areas) for all carbons in ¹³C-NMR analysis (broadband complete decoupling) is preferably 15% or less, more preferably 10% or less, further preferably 1% or less, and particularly preferably 0.5% or less. With respect to the reason for the preference of such fatty acids, the present inventors speculate that it is because the peaks in the region of a chemical shift of 40 ppm or more are assigned to methine groups and the carbons adjacent to methine groups and branched fatty acids with appropriate degree of branching are preferred.

The proportion that the fatty acid accounts for of the oxygen-containing organic compounds is preferably 60 to 100% by mass, more preferably 85 to 100% by mass, and further preferably 95 to 100% by mass based on the total amount of the oxygen-containing organic compounds.

The content of the oiliness agent contained in the compressor is 0.005 to 10% by mass, preferably 0.01 to 5% by mass, and more preferably 0.1 to 2% by mass, and further preferably 0.2 to 1% by mass based on the total amount of the compressor oil.

The compressor oil preferably further contains an antifoaming agent in addition to the additives described above for the purpose of defoaming in the compressor and defoaming during a removing step of removing hydrocarbons having 10 or less carbon atoms (the details are described below). The antifoaming agent includes, for example, acrylate-based antifoaming agents such as polyacrylates, siloxane-based antifoaming agents such as alkylpolysiloxanes, and fluorosilicone-based antifoaming agents. Among them, siloxane-based antifoaming agents are preferred. The content of the antifoaming agent is preferably 100 ppm or less by mass, and preferably 1 ppm or more and 20 ppm or less by mass.

The methods for adding the antifoaming agent include: (i) that where the antifoaming agent is dissolved in a solvent having high dissolving power such as kerosene to prepare an antifoaming agent concentrate, and then the antifoaming agent concentrate is added to the hydrocarbon oil or the composition containing the hydrocarbon oil and the additives; and (ii) that where the antifoaming agent is dissolved in a small amount of the hydrocarbon oil or a part of the composition containing the hydrocarbon oil and the additives using a commercially available mixer or an apparatus having homogenizing ability surpassing that of the mixer to prepare an antifoaming agent concentrate, and then the antifoaming agent concentrate is added to the residual hydrocarbon oil or composition containing the hydrocarbon oil and the additives, and the method of (ii) is more preferred. In the method of (ii), dimethylpolysiloxane having viscosity at 25°C of preferably 10,000 mPa-s or less, and more preferably 5,000 mPa-s or less is used as the antifoaming agent in terms of easily ensuring dispersibility. Further, the viscosity of the dimethylpolysiloxane at 25°C is preferably 1,000 mPa-s or more.

The content of the hydrocarbons having 10 or less carbon atoms in the compressor oil is 100 ppm or less by mass, preferably 50 ppm or less by mass, more preferably 20 ppm or less by mass, further preferably 15 ppm or less by mass, and particularly preferably 10 ppm or less by mass based on the total amount of the compressor oil. The content of the hydrocarbons having 10 or less carbon atoms in the compressor oil is calculated from the intensity of the peaks derived from the hydrocarbons having 10 or less carbon atoms in the gas chromatography analysis as defined in JIS K2254:1998 "Petroleum products - Determination of distillation characteristics".

The compressor oil according to the present embodiment may be produced by, for example, a method comprising the following steps:
(a) a providing step of providing a hydrocarbon oil having a sulfur content of 0.1% or less by mass and an aromatic content of 1% or less by mass;
(b) a preparing step of preparing a composition containing the hydrocarbon oil provided in the providing step;
(c) a removing step of removing hydrocarbons having 10 or less carbon atoms from the composition containing the hydrocarbon oil prepared in the preparing step such that the content of the hydrocarbons having 10 or less carbon atoms is 100 ppm or less by mass based on the total amount of the compressor oil.

At first, in the (a) providing step, a hydrocarbon oil having a sulfur content of 0.1% or less by mass and an aromatic content of 1% or less by mass is provided. As such hydrocarbon oil, the hydrocarbon oil of which a sulfur content and an aromatic content have been adjusted to 0.1% or less by mass and 1% or less by mass, respectively by, for example, hydrotreating may be used.

Then, in the (b) preparing step, a composition containing the hydrocarbon oil having the sulfur content of 0.1% or less by mass and the aromatic content of 1% or less by mass provided in the (a) providing step is prepared. As such composition, that solely composed of the hydrocarbon oil having the sulfur content of 0.1% or less by mass and the aromatic content of 1% or less by mass may be prepared, or alternatively, that containing other components and antifoaming agent in addition to the hydrocarbon oil may be prepared.

Then, in the (c) removing step, the hydrocarbons having 10 or less carbon atoms are removed from the composition containing the hydrocarbon oil having the sulfur content of 0.1% or less by mass and the aromatic content of 1% or less by mass prepared in the (b) preparing step such that the content of the hydrocarbons having 10 or less carbon atoms is 100 ppm or less by mass based on the total amount of the compressor oil. Examples of the specific methods for removing include that by heating under stirring, that by bubbling with an inert gas, that by irradiation with ultrasonic waves, that by vacuum deairing and that in combination of two or more thereof. In addition, at least one methods selected from that by bubbling with carbon dioxide, dried air or the like followed by an inert gas bubbling, that by irradiating with ultrasonic waves and that finishing by vacuum deairing may be performed. Further, the removing step may be performed by gas bubbling simultaneously with stirring for preparing the composition in the (b) preparing step. The removing step may be performed at a place where the compressor oil is manufactured, and in that case shipping containers including tank trucks are also under control by careful flashing or the like. In addition, it is also effective to perform the removing step within the apparatuses consuming the compressed gas or the subsidiary tanks thereof.

Regardless of the method for removing used, it is to be noted that the content of the hydrocarbons having 10 or less carbon atoms (100 ppm or less by mass based on the total amount of the compressor oil) after the removing step is at a level which has not been conventionally considered, and that it is impossible to rule out the possibility that the contamination is caused by a residue in an extremely small amount or the like in the shipping container or the like in addition to the raw materials of the compressor oil. Accordingly, the removing step is performed from the standpoint of minimizing the load to the apparatuses finally consuming the compressed gas.

In the method by heating under stirring, the heating temperature is preferably 60 to 150°C, more preferably 80 to 120°C, and further preferably 85 to 105°C. The stirring condition is preferably 200 rpm or more, more preferably 300 rpm or more, further preferably 400 rpm or more. The period of time of heating and stirring under such conditions is preferably 1 to 24 hours, more preferably 2 to 12 hours, and further preferably 4 to 6 hours.

In bubbling with an inert gas, nitrogen gas or argon gas is used, for example. The flow rate of the inert gas is preferably 1 L/h to 500 L/h, more preferably 10 L/h to 200 L/h, and further preferably 20 L/h to 100 L/h relative to 1 L of the composition. The period of time of bubbling under such conditions is preferably 1 to 72 hours, more preferably 2 to 48 hours, and further preferably 5 to 24 hours. The method by bubbling with an inert gas is preferably used in combination with the method by heating under stirring described above.

The compressor oil according to the present embodiment is obtained after the (c) removing step. Alternatively, when the compressor oil according to the present embodiment contains other components, the compressor oil may be obtained by adding a part or all of the other components into the composition obtained in the (c) removing step. Alternatively, the compressor oil may be obtained by adding a part of the hydrocarbon oil having the sulfur content of 0.1% or less by mass and the aromatic content of 1% or less by mass into the composition obtained in the (c) removing step. That is, the method for manufacturing a compressor oil according to the present embodiment may further comprise, after the (c) removing step, an adding step of adding at least one selected from a part of the hydrocarbon oil having the sulfur content of 0,1% or less by mass and the aromatic content of 1% or less by mass, a base oil other than the hydrocarbon oil having the sulfur content of 0.1% or less by mass and the aromatic content of 1% or less by mass, and an additive into the composition obtained in the (c) removing step.

The structure of the compressor using the compressor oil according to the present embodiment is not particularly restricted and the preferred compressors include positive-displacement compressors.

The gas to be compressed in the compressor using the compressor oil according to the present embodiment is not particularly restricted and hydrogen gas is suitable, high purity hydrogen gas with purity of 99.9% or more is more suitable, and high purity hydrogen gas with purity of 99.97% or more is particularly suitable.

The pressure of the gas to be compressed in the compressor using the compressor oil according to the present embodiment is not particularly restricted and is suitably 0.5 MPa or more, more suitably 5 MPa or more, and particularly suitably 35 MPa or more and yet 70 MPa or more. The upper limit is preferably 200 MPa or less.

The compressor oil according to the present embodiment is suitably used in a method for compressing hydrogen comprising a step of compressing hydrogen by the compressor described above. In addition, the compressor oil according to the present embodiment is suitably used in a method for generating electric power by a fuel cell. More specifically, the compressor oil according to the present embodiment is suitably used in a method for generating electric power comprising a step of using the hydrogen compressed by the compressor described above as a fuel for the fuel cell. Further, the compressor oil according to the present embodiment is suitably used in a method for supplying hydrogen comprising a step of supplying hydrogen compressed by the compressor described above to a fuel-cell vehicle.

### Examples

Hereinafter, the present invention will be described more specifically with Examples, but the present invention is not limited to the following Examples.

### [Test oils 1-1 to 1-8]

To 500 g of poly-α-olefin (decene derivative, kinematic viscosity at 40°C: 63 mm²/s, kinematic viscosity at 100°C: 9.6 mm²/s, viscosity index: 134, sulfur content: 1 ppm or less by mass, aromatic content: 1 ppm or less by mass) was added 1.5 mg (3 ppm by mass based on the total amount of the compressor oil) of dimethylpolysiloxane free of solvent (viscosity at 25°C: 3,000 mPa.s), and then a compressor oil (each of Test oils 1-1 to 1-8) was prepared according to each corresponding stirring temperature, stirring period of time, and N₂ bubbling period of time set forth in Table 1. The N₂ bubbling was performed at a nitrogen gas flow rate of 50 L/h relative to 1 L of the compressor oil. With respect to the N₂ bubbling time, it is noted that "-" in Table 1 indicates no N₂ bubbling performed. In Test oils 1-6 and 1-7, isostearic acid was formulated at 0.5% by mass based on the total amount of the compressor oil.

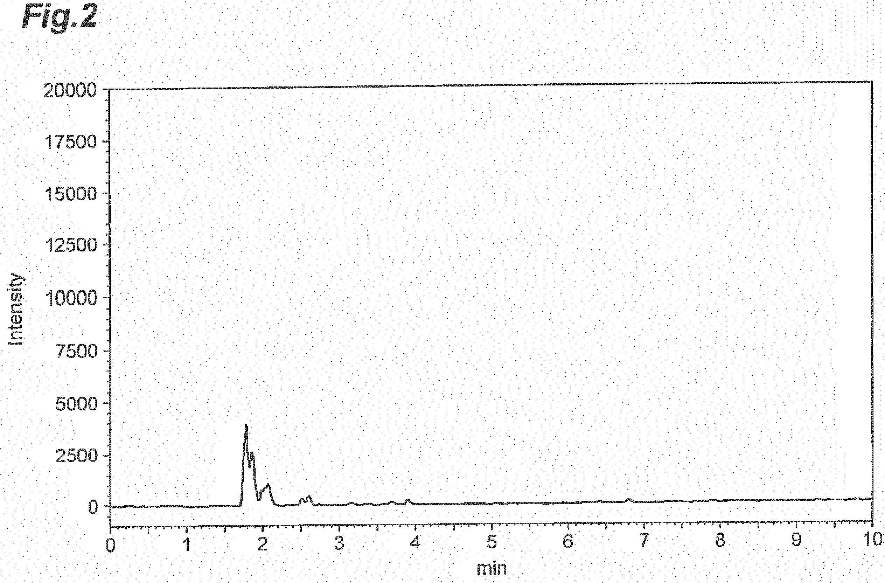

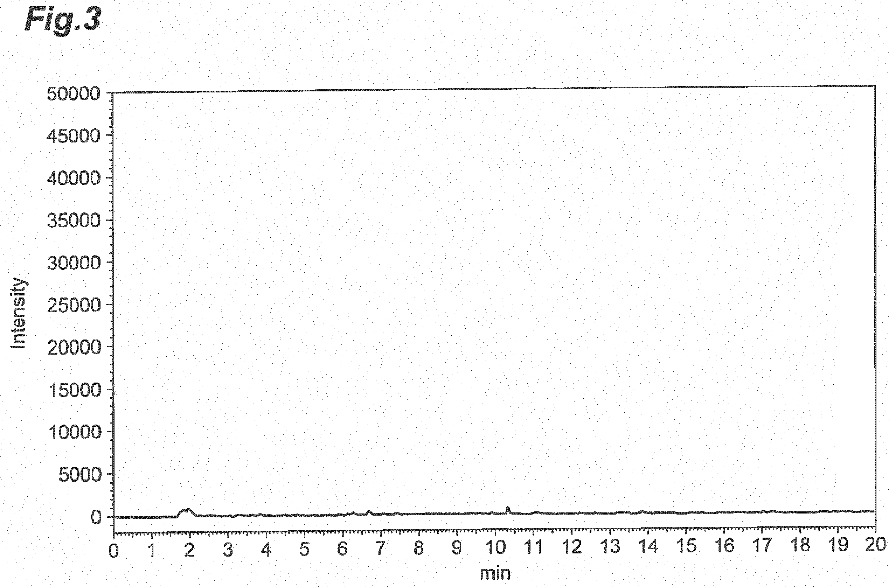

The content of the hydrocarbons having 10 or less carbon atoms was determined for each obtained compressor oil by the gas chromatography analysis as defined in JIS K2254:1998 "Petroleum products - Determination of distillation characteristics". Specifically, GC-2010, Shimadzu Corporation, was used with UA1HT (5 m x 0.5 mm diameter x 0.1 µm) for the column, helium for the carrier gas (15 mL/min), and an FID for the detector. The measurement was performed under conditions of a detection temperature of 400°C, an oven temperature of 40°C-380°C (in 6 minutes), a temperature change rate of 10°C/min, an injection volume of 0.5 µL, and a carbon disulfide solution (about 1%). The results are shown in Table 1. In Figure 2, there is shown the result of the gas chromatography analysis for the poly-α-olefin used in the preparation of the compressor oil as it is (untreated). The content of the hydrocarbons having 10 or less carbon atoms in the poly-α-olefin used in the preparation of the compressor oil as it is (untreated) was 26 ppm by mass. In Figure 3, the result of gas chromatography analysis for Test oil 1-1 is shown.

**[Table 1]**

| | Test oil 1-1 | Test oil 1-2 | Test oil 1-3 | Test oil 1-4 | Test oil 1-5 | Test oil 1-6 | Test oil 1-7 | Test oil 1-8 |
|---|---|---|---|---|---|---|---|---|
| Stirring temperature (°C) | 80 | 100 | 100 | 80 | 80 | 80 | 80 | 60 |
| Stirring time (h) | 5 | 3 | 5 | 3 | 3 | 5 | 5 | 1 |
| N₂ bubbling time (h) | - | - | - | 5 | 24 | *5* | 24 | - |
| Content of hydrocarbons having 10 or less carbon atoms (ppm) | 12 | 16 | 13 | 11 | 5 | 12 | 5 | 28 |

It was confirmed when Test oils 1-1 to 1-8 were used in a hydrogen compressor, the hydrogen was not contaminated. Among others, it was confirmed when Test oils 1-1 to 1-7 were used in the hydrogen compressor, the hydrogen was particularly suitably prevented from being contaminated.

### [Test oils 2-1 to 2-7]

In Test oils 2-1 to 2-7, the compressor oils set forth in Table 2 were prepared using the following hydrocarbon oil, oiliness agents and antifoaming agent, respectively. The preparation conditions (stirring temperature and time) for each Test oil are also set forth in Table 2.

### (Hydrocarbon oil)

PAO: poly-α-olefin, decene derivative, kinematic viscosity at 40°C: 63 mm²/s, kinematic viscosity at 100°C: 9.6 mm²/s, viscosity index: 134

### (Oiliness agent)

Isostearic acid A: a product of Nissan Chemical Industries, Ltd.
Isostearic acid B: Prisorine 3503, Croda Japan KK

### (Antifoaming agent)

Siloxane-based antifoaming agent: dimethylpolysiloxane having a kinematic viscosity at 25°C of 3000 mm²/s

It is noted that ¹³C-NMR measurement for Isostearic acid A and Isostearic acid B was carried out by the following method:
Name of the instrument: Varian-NMR system 500, resonance frequency: 125.76 MHz, solvent: deuterated chloroform, measuring temperature: room temperature (25°C), repeating time: 2 sec, integration times: 1024 times, probe: 5 mm in diameter (the measurement method used broadband complete decoupling).

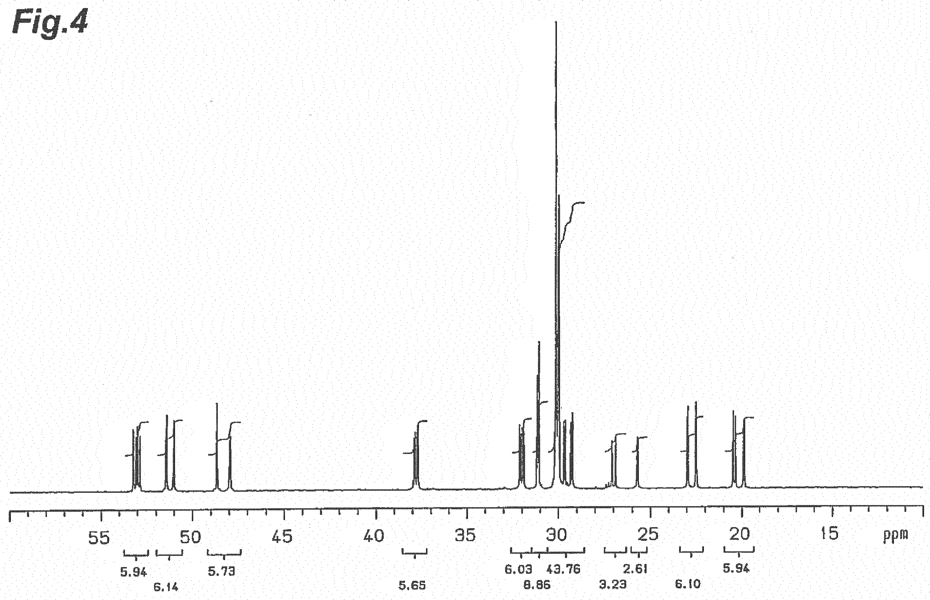

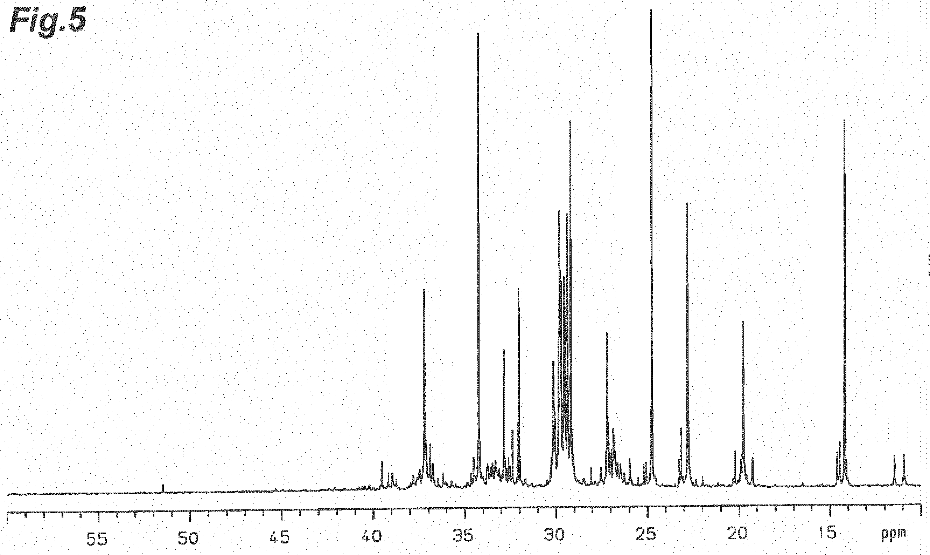

The ¹³C-NMR charts for Isostearic acid A and Isostearic acid B are shown in Figures 4 and 5, respectively. The proportions of the integrated values of the intensity of the peaks (peak areas) exhibiting chemical shifts of 40 ppm or more to the sum of the integrated values of the intensity of the peaks (peak areas) for all carbons were 16.8% and 0.1 % for Isostearic acid A and Isostearic acid B, respectively.

Then, evaluation for the friction coefficient, evaluation for the content of the hydrocarbons having 10 or less carbon atoms, foaming test and Shell 4-ball test were carried out for the compressor oils of Test oils 2-1 to 2-7. The results are shown in Table 2.

### (Evaluation for friction coefficient)

Evaluation for the friction coefficient was performed according to the method as defined in Norimune SODA, Report, Aeronautical Research Institute, No. 279 (1943).

### (Evaluation for content of hydrocarbons having 10 or less carbon atoms)

The content of the hydrocarbons having 10 or less carbon atoms was calculated from the intensity of the peaks derived from the hydrocarbons having 10 or less carbon atoms in the gas chromatography analysis as defined in JIS K2254:1998 "Petroleum products - Determination of distillation characteristics".

### (Foaming test)

The foaming test was performed by Sequence I as defined in JIS K2518:2003 "Petroleum products - Lubricating oil - Determination of foaming characteristics" (testing temperature: 24°C).

### (Shell 4-ball test)

Evaluation was carried out according to ASTM D4172 by measuring the diameters of wear scars on the steal balls at a rotational speed of 1200 rpm, a load of 30 kgf, a test time of 1 hr and room temperature (oil temperature).

**[Table 2]**

| | Test oil 2-1 | Test oil 2-2 | Test oil 2-3 | Test oil 2-4 | Test oil 2-5 | Test oil 2-6 | Test oil 2.7 |
|---|---|---|---|---|---|---|---|
| Composition | | | | | | | |
| PAO | Balance | Balance | Balance | Balance | Balance | Balance | Balance |
| Isostearic acid A (% by mass) | - | 0.5 | - | - | - | - | - |
| Isostearic acid B (% by mass) | - | - | 0.1 | 0.2 | 0.5 | 0.5 | 0.5 |
| Siloxane-based antifoaming agent (ppm by mass) | - | - | - | - | - | 3 | 3 |
| Preparation method (stirring temperature, time) | 60°C 3h | 60°C 3h | 60°C 3h | 60°C 3h | 60°C 3h | 60°C 3h | 80°C 3h |
| Friction coefficient | Unmeasurable | Unmeasurable | 0.14 | 0.13 | 0.12 | 0.12 | 0.12 |
| Content of hydrocarbons having 10 or less carbon atoms (ppm by mass) | 36 | 33 | 39 | 41 | 35 | 33 | 16 |
| Shell 4-ball test (abrasion mark diameter) (µm) | 0.55 | 0.41 | 0.39 | 0.37 | 0.34 | 0.35 | 0.35 |
| Sulfur content | < 1 ppm | < 1 ppm | < 1 ppm | < 1 ppm | < 1 ppm | < 1 ppm | < 1 ppm |
| Kinematic viscosity at 40°C (mm²/s) | 63 | 63 | 63 | 63 | 63 | 63 | 63 |
| Aromatic content (% by mass) | <0.01% | <0.01% | <0.01% | <0.01% | <0.01% | <0.01% | <0.01% |
| Viscosity index | 134 | 134 | 134 | 134 | 134 | 134 | 134 |
| Initial boiling point (°C) | 422 | 392 | 418 | 418 | 415 | 415 | 416 |
| 1% distillation point (°C) | 426 | 421 | 423 | 423 | 422 | 422 | 422 |
| Foaming test Sequence (I) | 170/0 | 190/0 | 220/0 | 240/0 | 190/0 | 0/0 | 0/0 |

## Claims

1. A compressor oil comprising a hydrocarbon oil having a sulfur content of 0.1% or less by mass and an aromatic content of 1% or less by mass,
wherein a content of hydrocarbons having 10 or less carbon atoms is 100 ppm or less by mass based on a total amount of the compressor oil.

2. The compressor oil according to claim 1, further comprising an oiliness agent consisting of an oxygen-containing organic compound,
wherein a content of the hydrocarbon oil is 90 to 99.995% by mass and a content of the oiliness agent is 0.005 to 10% by mass, based on the total amount of the compressor oil.

3. The compressor oil according to claim 2, wherein the oxygen-containing organic compound comprises a fatty acid having 14 to 22 carbon atoms.

4. The compressor oil according to claim 2 or 3, wherein the oxygen-containing organic compound comprises a branched fatty acid having 14 to 22 carbon atoms.

5. Use of the compressor oil according to any one of claims 1 to 4 for a compressor compressing hydrogen.

6. A method for manufacturing a compressor oil, comprising a step of removing hydrocarbons having 10 or less carbon atoms from a composition comprising a hydrocarbon oil having a sulfur content of 0.1 % or less by mass and an aromatic content of 1% or less by mass such that a content of the hydrocarbons having 10 or less carbon atoms is 100 ppm or less by mass based on a total amount of the compressor oil to obtain the compressor oil according to any one of claims 1 to 4.

7. A method for compressing hydrogen, comprising a step of compressing the hydrogen by a compressor comprising the compressor oil according to any one of claims 1 to 4.

8. A method for generating electric power by a fuel cell, comprising a step of using, as a fuel for the fuel cell, hydrogen compressed by a compressor comprising the compressor oil according to any one of claims 1 to 4.

9. A method for supplying hydrogen, comprising a step of supplying hydrogen compressed by a compressor comprising the compressor oil according to any one of claims 1 to 4 to a fuel-cell vehicle.
